# EUROPÄISCHE PATENTSCHRIFT

(11) **EP 3 775 366 B1**
(45) Veröffentlichungstag und Bekanntmachung des Hinweises auf die Patenterteilung: **17.08.2022**
(21) Anmeldenummer: 19732441.1
(22) Anmeldetag: 29.05.2019
(51) Int. Cl.: D07B 1/04, D07B 5/10, F16G 11/04

(54) **SEIL, INSBESONDERE ZUR ABSPANNUNG VON KOMPONENTEN EINER WINDENERGIEANLAGE**
CABLE, IN PARTICULAR CABLE STAY FOR COMPONENTS OF A WIND TURBINE
CÂBLE, EN PARTICULIER POUR ÉLÉMENTS DE TENSION D'UNE ÉOLIENNE

(30) Priorität: 06.06.2018 DE 102018113466
(43) Veröffentlichungstag der Anmeldung: 17.02.2021
(73) Patentinhaber: aerodyn consulting Singapore pte ltd, Singapore 188024 (SG)
(72) Erfinder: SIEGFRIEDSEN, Sönke, 24768 Rendsburg (DE)
(74) Vertreter: Lobemeier, Martin Landolf
(86) Internationale Anmeldenummer: PCT/IB2019/000456
(87) Internationale Veröffentlichungsnummer: WO 2019/234491

(56) Entgegenhaltungen:
- WO-A1-97/32710
- WO-A1-2008/129116
- GB-A- 1 127 822
- JP-A- H09 132 884
- US-A- 3 911 785

## Beschreibung

Die Erfindung betrifft ein Seil. Insbesondere betrifft die Erfindung ein Seil zur Abspannung von Komponenten einer Windenergieanlage. Speziell betrifft die Erfindung ein Seil zur Abspannung des Turms einer Windenergieanlage und eine dieses Seil aufweisende Windenergieanlage.

Seile zur Abspannung von Bauwerken, insbesondere von Masten aufweisenden Windenergieanlagen sind aus offenkundiger Vorbenutzung hinreichend bekannt. Derartige als Stahlseile ausgebildete Seile bestehen aus zusammengedrehten Drähten, die insbesondere zur Übertragung von im Bereich der Gondel auftretenden Lasten und deren Ableitung in das Fundament der Windenergieanlage verwendet werden.

Zur Übertragung großer Lasten werden Paralleldrahtseile verwendet, die aus parallel nebeneinander liegenden, also nicht verdrehten oder geschlagenen Drähten hergestellt sind und eine gleichmäßige Beanspruchung der Seildrähte und eine über den Querschnitt des Drahtseils gleichmäßig verteilte Lastübertragung ermöglichen. Derartige Paralleldrahtseile sind jedoch sehr aufwändig, zumeist nur direkt am Ort der Verwendung herzustellen und eignen sich nicht zur Verwendung in einer Vielzahl von Anwendungen.

Darüber hinaus sind Drahtseile allgemein sehr schwer. Aufgrund Ihres Gewichts haben sie eine niedrige Biegeeigenfrequenz und neigen bei entsprechender Anregung zu Schwingungen, die bei Windenergieanlagen zu schädlichen Auswirkungen führen. Es ist daher erforderlich, die Eigenfrequenz von Abspannseilen zu erhöhen, damit keine Anregung mehr stattfinden kann. Dafür muss das Verhältnis von Elastizitätsmodul des Abspannseils zu dessen spezifischer Masse maximiert werden.

Alternativ ist es beispielsweise bekannt, Seile als ein Bündel aus Kunststoffprofilen auszubilden, wobei das Bündel aus einem Kern und wenigstens einem den Kern umgebenden Kreisring mit einer Mehrzahl von kreisringsektorförmig ausgebildeten Kunststoffprofilen gebildet ist. Derartige Seile sind beispielsweise aus der WO 2208/129116 A1, der GB 1 127 822 A, der JP H 09 132884 A und der WO 97/32710 A1 bekannt. Zusätzlich wird auf die US 3 911 785 A verwiesen.

Aufgabe der Erfindung ist es jedenfalls, ein Seil zu schaffen, das eine über den Querschnitt verteilte gleichmäßige Lasteinleitung und -übertragung ermöglicht und verhältnismäßig einfach für eine Vielzahl von Anwendungen herzustellen ist.

Diese Aufgabe wird erfindungsgemäß durch das Seil mit den Merkmalen von Anspruch 1 gelöst. Die Unteransprüche geben vorteilhafte Ausgestaltungen der Erfindung wieder.

Grundgedanke der Erfindung ist es, ein Seil aus einer Mehrzahl von parallel angeordneten pultrudierten Kunststoffprofilen, also stranggezogenen Kunststoffprofilen herzustellen. Das Bereitstellen von Kunststoffprofilen, die bevorzugt jeweils eine identische Querschnittsfläche aufweisen, ermöglicht ein industrielles Herstellungsverfahren für ein Seil, das die Vorteile eines Paralleldrahtseils mit einem einfachen Herstellungsverfahren und einem gegenüber der Verwendung von Stahldraht geringerem Gewicht vereint.

Insbesondere geht es bei der vorliegenden Erfindung vor allem darum, die bei der Verwendung an Windenergieanlagen auftretende Eigenfrequenz des Seils zu erhöhen die Seilstruktur so auszulegen, dass hohe Lasten in die Übertragungsstruktur eingeleitet werden können. Dieses wird insbesondere durch die Verwendung von einzelnen im Querschnitt kleinen Einzelprofilen erreicht, die zu einem Seil zusammengesetzt sind. So ist das Verhältnis aus Elastizitätsmodul zu spezifischem Streckengewicht bei der Verwendung von Kohlefaserseilen aus stranggezogenen Unidirektionalfasern bei im Verhältnis zu Stahlseilen gleicher Festigkeit um einen Faktor von ca. 5 höher.

Erfindungsgemäß ist also ein Seil vorgesehen, das ein Bündel aus pultrudierten faserverstärkten Kunststoffprofilen aufweist, wobei das Bündel im Querschnitt als Kern mit einer Mehrzahl von sektorförmig ausgebildeten Kunststoffprofilen ausgebildet ist, der von wenigstens einem Kreisring mit einer Mehrzahl von kreisringsektorförmig ausgebildeten Kunststoffprofilen umgeben ist. Der zum Kern und zu den Kreisringen zusammengesetzten Profile bilden dabei jeweils gemeinsam einen kreisrunden Umfang aus.

Insbesondere weisen der Kern und der wenigstens eine Kreisring jeweils eine geradzahlige Anzahl von Kunststoffprofilen auf.

Das Seil weist bevorzugt ein Bündel von parallel angeordneten, pultrudierten faserverstärkten Kunststoffprofilen auf.

Die Kunststoffprofile sind bevorzugt aus einem in einer Epoxidmatrix eingebetteten Kohlefaserwerkstoff gebildet.

Dabei sind besonders bevorzugt die Stoßkanten von in einem Kreisring benachbart angeordneten kreisringsektorförmig ausgebildeten Kunststoffprofilen zwischen den Stoßkanten von Kunststoffprofilen des benachbarten Kerns und/oder eines weiteren Kreisrings angeordnet. Insbesondere unterscheidet sich die Anzahl der zu einem Ring zusammengesetzten Kunststoffprofile zwischen benachbarten Ringen. Speziell ist die Anzahl der zu einem Ring zusammengesetzten Kunststoffprofile eine Primzahl.

Weisen die Kunststoffprofile nicht ohnehin bereits eine Oberfläche mit einer vorbestimmten Rauigkeit auf, ist weiter bevorzugt vorgesehen, dass die Oberflächen der Kunststoffprofile geschliffen sind und eine vorbestimmte Rauheit aufweisen.

Das Bündel von Kunststoffprofilen ist bevorzugt von einem UV-beständigen und/oder wetterbeständigen und/oder elektrisch isolierenden Isolator umgeben. Dieser Isolator kann beispielsweise eine die Kunststoffprofile umgebende Beschichtung, insbesondere eine Beschichtung mit Polyurethan oder eine Beschichtung mit einem vernetzten Polyethylen (VPE) sein.

Nach einer weiteren bevorzugten Ausgestaltung ist eine mit dem Seil verbundene, konisch ausgebildete Seilendhülse mit einem an der Basis angeordneten Anschlagpunkt vorgesehen, sodass das Seil problemlos an entsprechenden Verbindungsmitteln angeschlagen werden kann.

Insbesondere weist der Anschlagpunkt ein mit einem an der Seilendhülse angeordneten Gewinde schraubendes Gewinde auf.

Eine vorteilhafte Weiterbildung der Erfindung besteht darin, dass in der Seilendhülse eine die Kunststoffprofile radial auseinanderzwängende Stachelplatte vorgesehen ist, die bevorzugt aus einem elektrisch nicht-leitfähigem Material gebildet ist. Die Stachelplatte hält die einzelnen Kunststoffprofile in einem gleichmäßigen Abstand zueinander. Dieses dient dazu, eine optimale Verklebung der Profile untereinander und mit der Metallhülse zu erreichen.

Insbesondere ist ein von der Seilendhülse aufgenommener und von der Stachelplatte verschlossener, die Enden der Kunststoffprofile aufnehmender kegelförmiger Hülseneinsatz mit wenigstens einer dessen Mantel durchstoßenden Öffnung vorgesehen.

Alternativ zu einer Stachelplatte kann auch eine Lochplatte verwendet werden, die eine Mehrzahl von Löchern aufweist, die bevorzugt jeweils ein Kunststoffprofil aufnehmen. Auch durch diese Ausgestaltung kann eine Spreizung der Kunststoffprofile im Bereich der Seilendhülse erreicht werden.

Weiter ist in die Seilendhülse ein die Kunststoffprofile im Bereich der Seilendhülse auseinanderzwängendes und stoffschlüssig miteinander verbindendes Harz eingebracht. Das Harz wird besonders bevorzugt durch die den Mantel des Hülseneinsatzes durchstoßenden Öffnungen zwischen die durch die Stachelplatte gespreizten Kunststoffprofile gebracht.

Schließlich ist eine die Seilendhülse auskleidende, die Seilendhülse gegenüber den Kunststoffprofilen elektrisch isolierende Isolierung vorgesehen. Die Isolierung ist insbesondere dann notwendig, wenn die Kunststoffprofile einen elektrisch leitfähigen Kohlefaserwerkstoff aufweisen, um eine Blitzstromableitung über das Seil zu verhindern.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine Seitenansicht einer bevorzugt ausgestalteten schwimmenden Windenergieanlage mit einem mittels gemäß der Erfindung besonders bevorzugt ausgestalteter Seile abgespannten Turm;
- Fig. 2: eine Detailansicht der Windenergieanlage aus Fig. 1 im Bereich der Gondel der Windenergieanlage;
- Fig. 3: eine Explosionsansicht eines besonders bevorzugt ausgestalteten Seils;
- Fig. 4: Detailansichten (A, B) des im Hülseneinsatz angeordneten Seils;
- Fig. 5: Frontalansichten des im Hülseneinsatz angeordneten Seils (A) und Querschnitte des Seils (B, C) nach bevorzugten Ausgestaltungen der Erfindung;
- Fig. 6: eine Detailansicht eines besonders bevorzugt ausgestalteten Seils im Bereich der Endhülse als Längsschnitt (A), in Draufsicht (B) und als Frontalansicht (C); und
- Fig. 7: eine Draufsicht auf zwei bevorzugt ausgestaltete Ausführungsbeispiele einer anstelle der Stachelplatte zu verwendenden Lochplatte zum Auseinanderzwängen der Kunststoffprofile im Bereich der Seilendhülse.

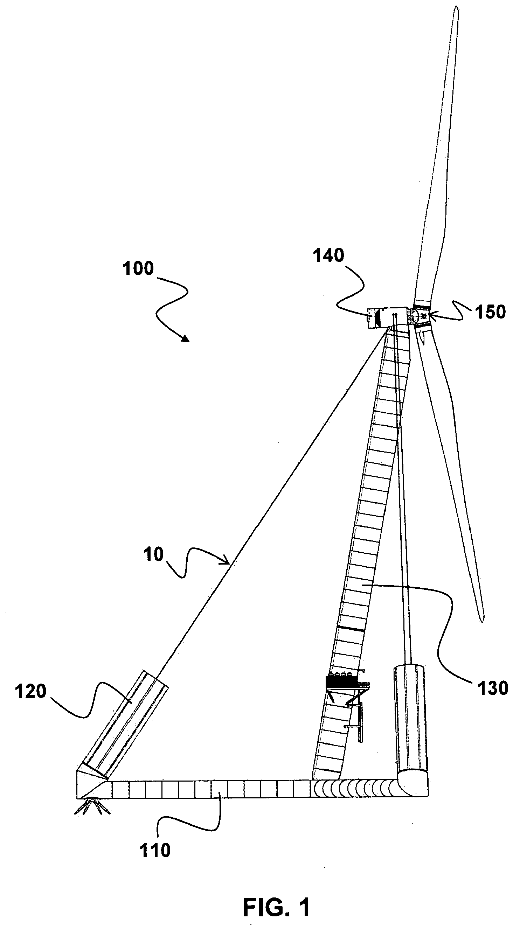

Fig. 1 zeigt eine Seitenansicht einer bevorzugt ausgestalteten schwimmenden Windenergieanlage mit einem mittels gemäß der Erfindung besonders bevorzugt ausgestalteter Seile abgespannten Turm.

Der Aufbau der in Fig. 1 dargestellten schwimmenden Windenergieanlage 100 ist grundsätzlich aus der EP 3 019 740 B1 bekannt. Die schwimmende Windenergieanlage 100 weist ein schwimmendes Fundament 110 auf, das mit dem Fundament 110 fest verbundene Schwimmkörper 120 aufweist, die auch als integraler Bestandteil des Fundaments 110 ausgebildet sein können. Auf dem Fundament 110 ist ein Turm (oder Mast) 130 angeordnet, auf dem eine Gondel 140 angeordnet ist, die einen Rotor 150 trägt.

Der Mast 130 ist mittels einer Vielzahl von Seilen 10 abgespannt, die einerseits an der Oberseite des Turms 130 oder der Gondel 140 und andererseits am Fundament 110 bzw. den mit dem Fundament 110 verbundenen Schwimmkörpern 120 angeordnet sind. Die im Bereich des oberen Turmabschnitts auftretenden Lasten werden also mittels der Seile 10 in das Fundament 110 der schwimmenden Windenergieanlage 100 abgeleitet.

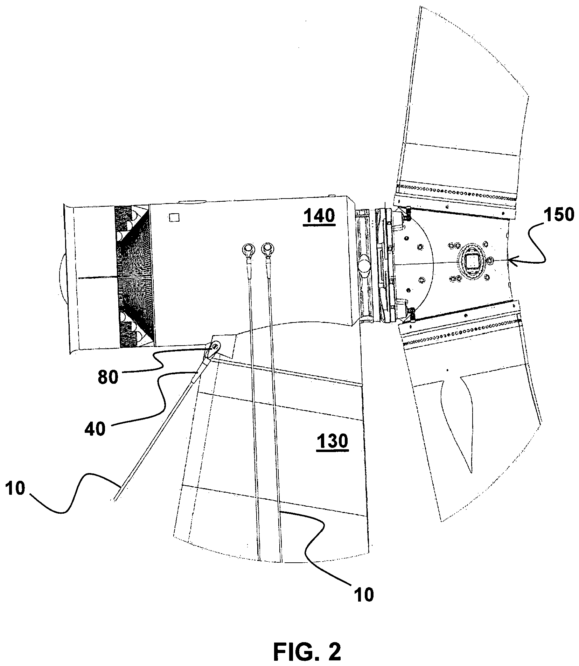

Zur Befestigung der Seile 10 am Turm 130 bzw. der Gondel 140 bzw. am Fundament 110 weisen die Seile, wie in Fig. 2 gezeigt, eine konisch ausgebildete Seilendhülse 40 mit einem an deren Basis angeordneten Anschlagpunkt 80 auf.

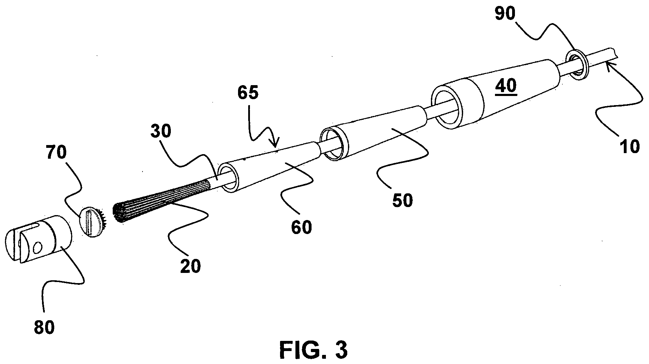

Der Aufbau eines besonders bevorzugt ausgestalteten Seils ist in Fig. 3 mittels einer Explosionsansicht dargestellt.

Das Seil 10 besteht aus einer Vielzahl von parallel angeordneten, pultrudierten faserverstärkten Kunststoffprofilen 20, die von einer UV-beständigen und elektrisch isolierenden Schicht 30 umgeben und zu einem Bündel zusammengehalten sind.

Das Ende des Bündels ist innerhalb einer Seilendhülse 40, von einer elektrisch isolierenden Isolierung 50 gegenüber dieser elektrisch isoliert angeordnet Die elektrische Isolierung ist notwendig, um eine Ableitung des Blitzstroms über die insbesondere aus elektrisch leitendem Kohlefaserwerkstoff hergestellten Kunststoffprofile zu verhindern. Insbesondere wird das Ende des Seils 10 innerhalb der Seilendhülse 40 von einem die Enden der Kunststoffprofile 20 aufnehmenden kegelförmigen Hülseneinsatz 60 mit wenigstens einer dessen Mantel. durchstoßenden Öffnung 65 aufgenommen. Durch die Öffnungen 65 wird ein härtendes Harz in den Hülseneinsatz unter Druck eingespritzt, das die durch die den Hülseneinsatz 60 verschließende Stachelplatte 70 gespreizten Kunststoffprofile 20 miteinander vergießt.

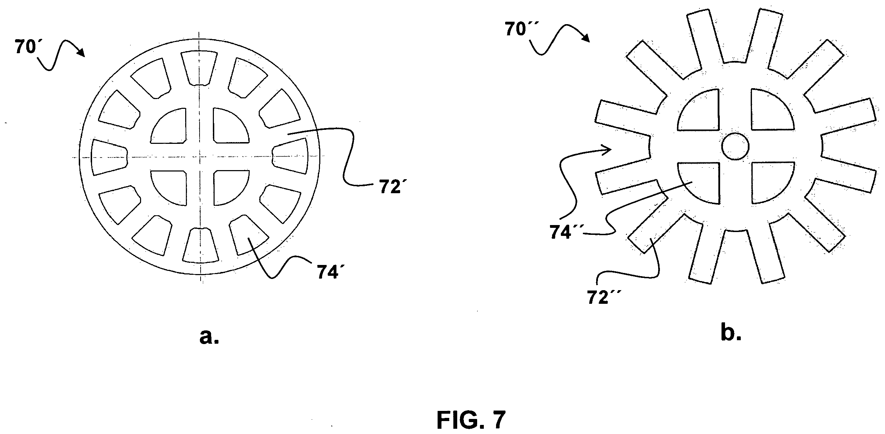

Anstelle der Stachelplatte 70 kann auch eine der in Fig. 7a und Fig. 7b gezeigten Lochplatten 70', 70" verwendet werden, die eine bevorzugt der Anzahl der Kunststoffprofile 20 entsprechende Anzahl von zueinander durch Stege 72', 72" beabstandeten Löchern 74', 74" aufweist, die die Kunststoffprofile 20 (einzeln) auseinander gespreizt aufnehmen. Die Löcher 74', 74" sind dabei sektorförmig und gleichmäßig, insbesondere symmetrisch angeordnet.

Schließlich wird die Seilendhülse 40 durch den Anschlagpunkt 80 stirnseitig verschlossen, wobei der Anschlagpunkt 80 und die Hülse 40 bevorzugt jeweils ein miteinander schraubendes Gewinde aufweisen. Dem Anschlagpunkt 80 gegenüberliegend ist bevorzugt noch ein die Seilendhülse 40 auf der anderen Seite verschließender Ring 90 vorgesehen, der das Seil 10 umgibt und ebenfalls mittels eines Gewindes an der Seilendhülse 40 befestig wird.

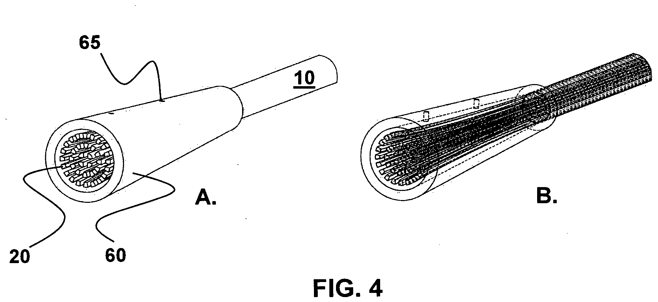

Fig. 4 zeigt zwei Detailansichten des im Hülseneinsatz 60 angeordneten Seils 10, bei dem die gespreizten Kunststoffprofile 20 wie auch die für das Einspritzen des Harzes vorgesehenen Einfüllöffnungen 65 deutlich zu erkennen sind.

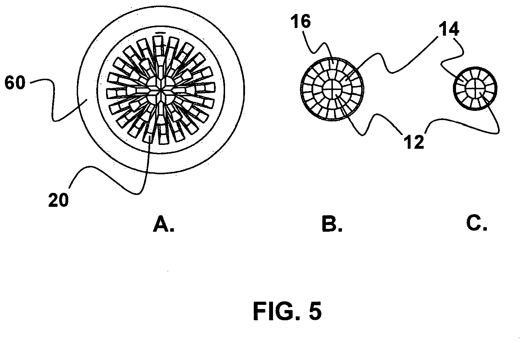

Fig. 5 zeigt Frontalansichten des im Hülseneinsatz angeordneten Seils (A) und Querschnitte des Seils (B, C) nach bevorzugten Ausgestaltungen der Erfindung. Fig. 5A zeigt - wie auch schon Fig. 4 zuvor - die gespreizten Kunststoffprofile 20 im Hülseneinsatz 60. Allen Ansichten aus Fig. 5 ist die konzentrische Anordnung der parallel geführten Kunststoffprofile 20 gemeinsam.

Fig. 5B zeigt eine Anordnung mit einem Kern 12 mit einer Mehrzahl von sektorförmig ausgebildeten Kunststoffprofilen 20, der von einem ersten Kreisring 14 und einem zweiten Kreisring 16 mit jeweils einer Mehrzahl von kreisringsektorförmig ausgebildeten Kunststoffprofilen 20 umgeben ist.

Die Profile 20 sind jeweils so angeordnet, dass die Stoßkanten von in einem Kreisring 14, 16 benachbart angeordneten kreisringsektorförmig ausgebildeten Kunststoffprofilen 20 zwischen den Stoßkanten von Kunststoffprofilen 20 des benachbarten Kerns 12 und/oder eines weiteren Kreisrings 14, 16 angeordnet sind.

Fig. 5c zeigt eine Ausgestaltung eines Seils mit einem Kern 12 und lediglich einem den Kern umgebenden Kreisring 14.

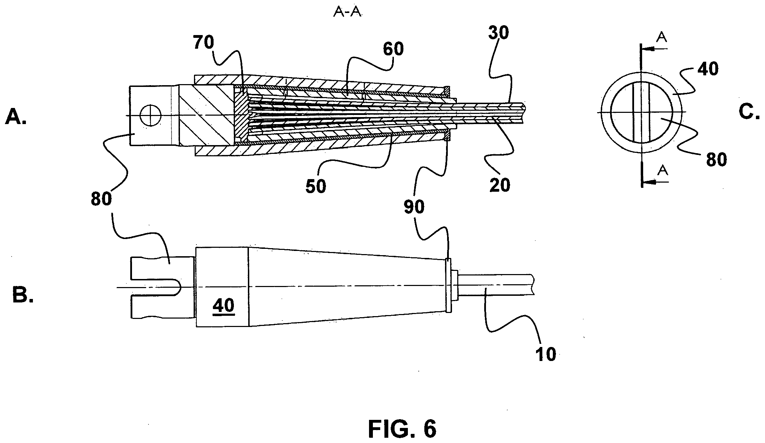

Schließlich zeigt Fig. 6 eine Detailansicht eines besonders bevorzugt ausgestalteten Seils im Bereich der Endhülse als Längsschnitt (A), in Draufsicht (B) und als Frontalansicht (C).

Wie zuvor beschrieben ist das Ende des Seils 10 besonders bevorzugt in einer Seilendhülse 40 angeordnet, speziell im Hülseneinsatz 60, der gegenüber der Seilendhülse 10 elektrisch durch die Isolierung 50 isoliert ist. Innerhalb des Hülseneinsatzes 60 sind die parallel geführten Kunststoffprofile 20 des Seils 10 durch die Stachelplatte 70 (oder alternativ eine der Lochplatten 70', 70"), die den Hülseneinsatz 60 an dessen Basis verschließt gespreizt und mittels eines ausgehärteten Harzes miteinander verbunden.

Das Harz füllt somit den freien Raum der Seilendhülse 40 aus und überträgt die in den Kunststoffprofilen 20 auftretenden Zuglasten über Schubspannungen in das Harz und dieses wiederum durch Druckspannungen in die Seilendhülse 40. Dabei sind die Kunststoffprofile 20 durch den vom Harz vermittelten Formschluss gesichert.

Die Seilendhülse 40 ist an deren Basis durch einen Anschlagpunkt 80 verschlossen, der besonders einfach mittels entsprechend vorgesehener Gewinde mit der Seilendhülse 40 verbunden werden kann. Der konisch zulaufende Bereich der Seilendhülse 40, aus dem die Kunststoffprofile 20 des Seil 10 heraustreten ist mittels des Rings 90, den Spalt zwischen Seil 10 und Seilendhülse 40 abdichtend verschlossen.

## Patentansprüche

1. Seil (10) aufweisend ein Bündel aus pultrudierten faserverstärkten Kunststoffprofilen (20), wobei das Bündel im Querschnitt als Kern (12) und wenigstens einem den Kern (12) umgebenden Kreisring (14, 16) mit einer Mehrzahl von kreisringsektorförmig ausgebildeten Kunststoffprofilen (20) gebildet ist,
**dadurch gekennzeichnet, dass**
der Kern (12) aus einer Mehrzahl von im Querschnitt sektorförmig ausgebildeten Kunststoffprofilen (20) gebildet ist.

2. Seil (10) nach Anspruch 1, **dadurch gekennzeichnet, dass** der Kern (12) und der wenigstens eine Kreisring (14, 16) jeweils eine geradzahlige Anzahl von Kunststoffprofilen aufweisen.

3. Seil (10) nach einem der Ansprüche 1 und 2, **dadurch gekennzeichnet, dass** die Stoßkanten von in einem Kreisring (14, 16) benachbart angeordneten kreisringsektorförmig ausgebildeten Kunststoffprofilen (20) zwischen den Stoßkanten von Kunststoffprofilen (20) des benachbarten Kerns (12) und/oder eines weiteren Kreisrings (14, 16) angeordnet sind.

4. Seil (10) nach einem der vorhergehenden Ansprüche, **dadurch gekennzeichnet, dass** die Oberflächen der Kunststoffprofile (20) geschliffen sind.

5. Seil (10) nach einem der vorhergehenden Ansprüche, **dadurch gekennzeichnet, dass** das Bündel von einem elektrisch isolierenden Isolator (30) umgeben ist.

6. Seil (10) nach einem der vorhergehenden Ansprüche, **gekennzeichnet durch** eine konisch ausgebildete Seilendhülse (40) mit einem an der Basis angeordneten Anschlagpunkt (80).

7. Seil (10) nach Anspruch 6, **dadurch gekennzeichnet, dass** der Anschlagpunkt (80) ein mit einem an der Seilendhülse (40) angeordneten Gewinde schraubendes Gewinde aufweist.

8. Seil (10) nach einem der Ansprüche 6 und 7, **dadurch gekennzeichnet, dass** die Seilendhülse (40) eine die Kunststoffprofile (20) auseinanderzwängende Stachelplatte (70) aufweist.

9. Seil (10) nach einem der Ansprüche 6 und 7, **dadurch gekennzeichnet, dass** die Seilendhülse (40) eine die Kunststoffprofile (20) auseinanderzwängende Lochplatte (70', 70") aufweist.

10. Seil (10) nach einem der Ansprüche 8 und 9, **gekennzeichnet durch** einen von der Seilendhülse (40) aufgenommenen und von der Stachelplatte (70) oder der Lochplatte (70', 70") verschlossenen, die Enden der Kunststoffprofile (20) aufnehmenden kegelförmigen Hülseneinsatz (60) mit wenigstens einer dessen Mantel durchstoßenden Öffnung (65).

11. Seil (10) nach einem der Ansprüche 6 bis 10, **gekennzeichnet durch** ein in der Seilendhülse (40) angeordnetes, die Kunststoffprofile (20) im Bereich der Seilendhülse (40) auseinanderzwängendes und stoffschlüssig miteinander verbindendes Harz.

12. Seil (10) nach einem der Ansprüche 6 bis 11, **gekennzeichnet durch** eine die Seilendhülse (40) auskleidende, die Seilendhülse (40) gegenüber den Kunststoffprofilen (20) elektrisch isolierende Isolierung (50).

13. Seil nach einem der vorhergehenden Ansprüche, **dadurch gekennzeichnet, dass** die Kunststoffprofile mit Kohlefasern verstärkt sind.

## Claims

1. Cable (10) having a bundle of pultruded fiber-reinforced plastic profiles (20), wherein the bundle is formed in cross-section as a core (12) and at least one annulus (14, 16) surrounding the core (12) and having a plurality of annulus-sector-shaped plastic profiles (20),
**characterized in that**
the core (12) is formed from a plurality of plastic profiles (20) which are sector-shaped in cross-section.

2. Cable (10) according to claim 1, **characterized in that** the core (12) and the at least one annulus (14, 16) each have an even number of plastic profiles.

3. Cable (10) according to any of claims 1 and 2, **characterized in that** the abutting edges of annulus-sector-shaped plastic profiles (20) arranged adjacent to one another in an annulus (14, 16) are arranged between the abutting edges of plastic profiles (20) of the adjacent core (12) and/or of a further annulus (14, 16).

4. Cable (10) according to any of the preceding claims, **characterized in that** the surfaces of the plastic profiles (20) are ground.

5. Cable (10) according to any of the preceding claims, **characterized in that** the bundle is surrounded by an electrically insulating insulator (30).

6. Cable (10) according to any of the preceding claims, **characterized by** a conical cable end sleeve (40) having an anchor point (80) arranged on the base.

7. Cable (10) according to claim 6, **characterized in that** the anchor point (80) has a thread which screws together with a thread arranged on the cable end sleeve (40).

8. Cable (10) according to any of claims 6 and 7, **characterized in that** the cable end sleeve (40) has a spiked plate (70) which forces the plastic profiles (20) apart.

9. Cable (10) according to any of claims 6 and 7, **characterized in that** the cable end sleeve (40) has a perforated plate (70', 70") which forces the plastic profiles (20) apart.

10. Cable (10) according to any of claims 8 and 9, **characterized by** a cone-shaped sleeve insert (60) which is received by the cable end sleeve (40) and closed by the spiked plate (70) or the perforated plate (70', 70") and which receives the ends of the plastic profiles (20) and has at least one opening (65) passing through its lateral face.

11. Cable (10) according to any of claims 6 to 10, **characterized by** a resin which is arranged in the cable end sleeve (40) and forces the plastic profiles (20) apart in the region of the cable end sleeve (40) and integrally bonds them to one another.

12. Cable (10) according to any of claims 6 to 11, **characterized by** insulation (50) which lines the cable end sleeve (40) and electrically insulates the cable end sleeve (40) from the plastic profiles (20).

13. Cable according to any of the preceding claims, **characterized in that** the plastic profiles are reinforced with carbon fibers.

## Revendications

1. Câble (10) comportant un faisceau de profilés pultrudés (20) en matière plastique renforcés par des fibres, le faisceau étant formé en section transversale sous la forme d'un noyau (12) et au moins un bague annulaire (14, 16) entourant le noyau (12) et comprenant une pluralité de profilés en matière plastique (20) réalisés en forme de secteur circulairement annulaire,
**caractérisée en ce que**
le noyau (12) est formé par une pluralité de profilée en matière plastique (20) réalisés en forme de secteur en section transversale.

2. Câble (10) selon la revendication 1, **caractérisée en ce que** le noyau (12) et l'au moins un bague annulaire (14, 16) comportent respectivement un nombre pair de profilés en matière plastique.

3. Câble (10) selon l'une quelconque des revendications 1 et 2, **caractérisée en ce que** les bords d'impact de profilés en matière plastique (20) réalisés en forme de secteur circulairement annulaire disposés adjacents les uns aux autres dans un bague annulaire (14, 16) sont disposés entre les bords d'impact de profilés en matière plastique (20) du noyau (12) adjacent et/ou d'un autre bague annulaire (14, 16).

4. Câble (10) selon l'une quelconque des revendications précédentes, **caractérisée en ce que** la surface des profilés en matière plastique (20) est poncée.

5. Câble (10) selon l'une quelconque des revendications précédentes, **caractérisée en ce que** le faisceau est entouré par un isolateur (30) isolant électriquement.

6. Câble (10) selon l'une quelconque des revendications précédentes, **caractérisée par** un manchon d'extrémité de câble (40) de forme conique comprenant un point de butée (80) disposé à la base.

7. Câble (10) selon la revendication 6, **caractérisée en ce que** le point de butée (80) comporte un filetage se vissant avec un filetage disposé sur le manchon d'extrémité de câble (40).

8. Câble (10) selon l'une quelconque des revendications 6 et 7, **caractérisée en ce que** le manchon d'extrémité de câble (40) comporte une plaque à aiguilles (70) écartant les profilés en matière plastique (20) les uns des autres.

9. Câble (10) selon l'une quelconque des revendications 6 et 7, **caractérisée en ce que** le manchon d'extrémité de câble (40) comporte une plaque perforée (70',70") écartant les profilés en matière plastique (20) les uns des autres.

10. Câble (10) selon l'une quelconque des revendications 8 et 9, **caractérisée par** un insert de douille (60) conique reçu par le manchon d'extrémité de câble (40) et fermé par la plaque à aiguille (70) ou la plaque perforée (70', 70") recevant les extrémités des profilés en matière plastique (20) comprenant au moins une ouverture (65) traversant son enveloppe.

11. Câble (10) selon l'une quelconque des revendications 6 à 10, **caractérisée par** une résine disposée dans le manchon d'extrémité de câble (40), écartant et connectant les uns aux autres par complémentarité de forme les profilés en matière plastique (20) dans la zone du manchon d'extrémité de câble (40).

12. Câble (10) selon l'une quelconque des revendications 6 à 11, **caractérisée par** une isolation (50) enveloppant le manchon d'extrémité de câble (40), isolant électriquement le manchon d'extrémité de câble (40) par rapport au profilés en matière plastique (20).

13. Câble selon l'une quelconque des revendications précédentes, **caractérisée en ce que** les profilés en matière plastique sont renforcés par des fibres de carbone.
